(19) Europäisches Patentamt

European Patent Office

Office européen des brevets

(11) **EP 2 711 894 A2**

(12) **EUROPEAN PATENT APPLICATION**

(43) Date of publication:
**26.03.2014 Bulletin 2014/13**

(51) Int Cl.:
*G06T 7/00* (2006.01)  *H04N 13/00* (2006.01)

(21) Application number: **13159333.7**

(22) Date of filing: **15.03.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **21.09.2012 JP 2012208444** | (71) Applicant: **Kabushiki Kaisha Toshiba**<br>**Tokyo 105-8001 (JP)**<br><br>(72) Inventor: **Fujisawa, Tatsuro**<br>**Tokyo (JP)**<br><br>(74) Representative: **Henkel, Breuer & Partner**<br>**Patentanwälte**<br>**Maximiliansplatz 21**<br>**80333 München (DE)** |

(54) **Image processing device, image processing method and image processing program**

(57) According to one embodiment, an image processing device includes a block determiner, a flat area generator, and a depth information generator. The block determiner is configured to determine whether each of blocks in an input image is a flat block or a non-flat block. The flat area generator is configured to generate a flat area including at least one flat block based on continuity of the flat block. The depth information generator is configured to generate depth information added to all of the flat blocks in the flat area in common according to a first number and a second number. The first number is the number of the non-flat blocks which is similar to the neighboring flat block and the second number is the number of the non-flat blocks which is not similar to the neighboring flat block among the non-flat blocks neighboring the flat block in the flat area.

EP 2 711 894 A2

**Description**

FIELD

Embodiments described herein relate generally to an image processing device, an image processing method and an image processing program.

BACKGROUND

Recently, stereoscopic displays which display an image stereoscopically have been widely used. In this kind of stereoscopic displays, a plurality of parallax images viewed from different viewpoints are displayed on the display, and the image is stereoscopically seen by viewing one of the parallax images with left eye and another of the parallax images with right eye. With regard to autostereoscopic display manner which does not use glasses, it is preferable to display not only two parallax images for left eye and right eye, but also more parallax images.

In order to do so, it is necessary to calculate a depth value for each pixel from the parallax image for left eye and the one for right eye, and to generate more parallax images based on the calculated depth value.

For calculating the depth value, for example, the depth value can be calculated based on a shift amount between one block in the parallax image for left eye and the corresponding block in the one for right eye obtained by performing stereo-matching between the parallax image for left eye and the one for right eye. However, in a flat area, it is difficult to detect the corresponding area accurately because features between the parallax images are similar. As a result, incorrect depth values may be obtained in the flat area.

BRIEF DESCRIPTION OF THE DRAWINGS

Fig. 1 is a schematic block diagram showing an image processing device according to one embodiment.
Fig. 2 is a flowchart showing an example of processing operation of the image processing device of Fig. 1.
Figs. 3A and 3B are diagrams showing an example of the flat block determination.
Figs. 4A to 4C are diagrams showing an example of the labeling processing, which explains Step S3 of Fig. 2.
Fig. 5 is a flowchart showing procedures of the labeling processing.
Figs. 6A and 6B are diagrams showing an example of the elimination processing.
Figs. 7A and 7B are diagrams showing an example of the combining processing.
Figs. 8A and 8B are diagrams for explaining the processing operation of the depth information generator 4.
Fig. 9 is a flowchart showing an example of processing operation of the depth information generator 4.
Fig. 10 is a diagram showing a relationship between the boundary non-flat block and the flat block.
Figs. 11A to 11C are diagrams for explaining the processing operation of the depth information generator 4.
Figs. 12A to 12C are diagrams for explaining the processing operation of the depth information generator 4.
Fig. 13 is a diagram showing a shift direction on the display 10 for objects displayed at near-side.
Fig. 14 is a diagram showing a shift direction on the display 10 for objects displayed at further-side.
Fig. 15 is a diagram showing another example of depth information generation.

DETAILED DESCRIPTION

In general, according to one embodiment, an image processing device includes a block determiner, a flat area generator, and a depth information generator. The block determiner is configured to determine whether each of blocks in an input image is a flat block or a non-flat block. The flat area generator is configured to generate a flat area including at least one flat block based on continuity of the flat block. The depth information generator is configured to generate depth information added to all of the flat blocks in the flat area in common according to a first number and a second number. The first number is the number of the non-flat blocks which is similar to the neighboring flat block and the second number is the number of the non-flat blocks which is not similar to the neighboring flat block among the non-flat blocks neighboring the flat block in the flat area.

Embodiments will now be explained with reference to the accompanying drawings.

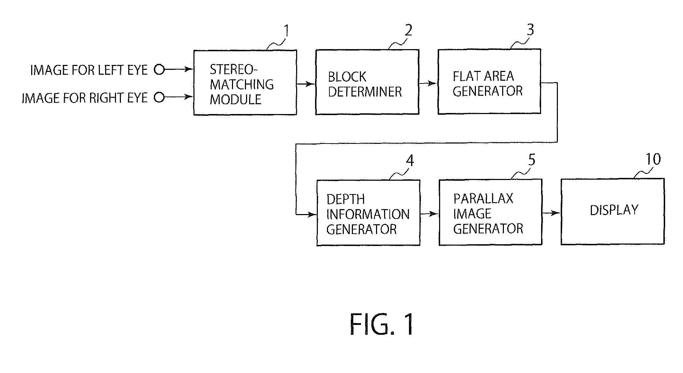

Fig. 1 is a schematic block diagram showing an image processing device according to one embodiment. The image processing device has a stereo-matching module 1, a block determiner 2, a flat area generator 3, a depth information generator 4, a parallax image generator 5 and a display 10. Among them, components except the display 10 are implemented as an IC (Integrated Circuit), for example.

The present image processing device generates a plurality of (for example, nine) parallax images from an image for left eye and an image for right eye, and stereoscopically displays an image in the autostereoscopic manner. The image for left eye is an image viewed from a first viewpoint, and the image for right eye is an image viewed from a second viewpoint which is at right side of the first viewpoint. The images for left eye and right eye are divided into blocks each of which is composed of one or a plurality of pixels when processed by the image processing device. Although the size of the block is arbitrary, the block is composed by 8 x 8 pixels, for example.

The images for left eye and right eye may be obtained by receiving and tuning the broadcast wave, or by being read out from a recording medium such as optical disc or hard disk.

The stereo-matching module 1 performs stereo-matching on the images for left eye and right eye, and adds tentative depth information to the image for left eye or the image for right eye. The depth information is, for example, a depth value indicating how far the block should be seen at near-side or far-side from the display 10. Hereinafter, it is assumed that the tentative depth information is added to each block in the image for left eye, and that the image for left eye and the tentative depth information are outputted.

The block determiner 2 determines whether each block in the image for left eye is a flat or non-flat. Hereinafter, the block determined to be flat is named "flat block" and the one determined to be non-flat is named "non-flat block".

The flat area generator 3 adds a label into each flat block by performing labeling processing on the flat blocks taking continuity of the flat blocks into consideration. A flat area is formed by flat blocks to which common label is added. That is, the number of generated flat area is equal to the number of labels, and each flat area includes one or a plurality of flat blocks. Furthermore, the flat area generator 3 may perform elimination processing for eliminate a flat area including a few flat blocks, and/or perform combining processing for combining a plurality of non-continuous flat areas having similar features, if needed.

The depth information generator 4 generates depth information added to all of the flat blocks in each of the flat areas in common taking the similarity between the flat blocks in the flat area and the non-flat blocks neighboring the flat blocks. In order to generate the depth information, it is possible to use tentative depth information added to the non-flat blocks neighboring the flat blocks in the flat area.

The parallax image generator 5 generates nine parallax images based on the image for left eye and the depth information. The depth information means the depth information generated by the depth information generator 4 for each block in the flat area, and means the tentative depth information added by the stereo-matching module 1 for the other blocks.

The display 10 displays the plurality of parallax images simultaneously. Then, a lenticular lens (not shown) is attached on the display 10, and the output direction of each of the parallax images is controlled. By viewing one of the nine parallax images with left eye and another of the nine parallax images with right eye, the image is stereoscopically seen. Of course, it is possible to realize stereoscopic viewing by another manner such as using parallax barrier and so on.

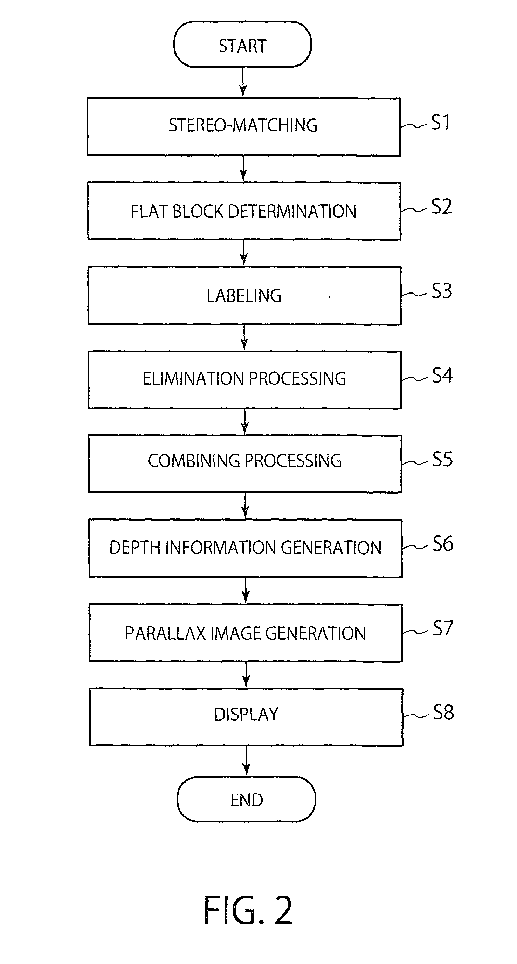

Fig. 2 is a flowchart showing an example of processing operation of the image processing device of Fig. 1. With reference to Fig. 2, processing operation of each component will be explained in detail.

Firstly, the stereo-matching module 1 performs stereo-matching on the images for left eye and right eye, to add the tentative depth information to each block in the image for left eye (Step S1). In the stereo-matching processing, with regard to one block in the image for left eye, a corresponding block in the image for right eye is searched, the corresponding block being a block in the image for right eye which minimizes the error (for example, a sum of absolute difference of each pixel) from the block in the image for left eye. Then, the stereo-matching module 1 calculates the tentative depth information of each block based on how much both blocks are shifted, that is, a parallax.

By the stereo-matching, rather accurate depth information is generated in a part of edges of objects and so on. On the other hand, accurate depth information is not always generated in a flat part such as a wall with only white color and sky with only blue color. This is because the error between the image for left eye and the one for right eye is small in the flat part, and thus, incorrect search processing may be performed. Therefore, the depth information added by the stereo-matching processing is called "tentative" depth information.

In the present embodiment, the following processing is performed to modify the tentative depth information of the flat part. Accordingly, it is unnecessary to perform iterative operation and so on for improving the accuracy of the matching, thereby suppressing the increase of the circuit volume and/or processing time of the stereo-matching module 1.

The block determiner 2 performs flat block determination which determines whether each block in the left eye is flat or non-flat (Step S2). For example, the block determiner 2 determines the block to be a flat block when variance of the luminance or color in the block is larger than a predetermined threshold.

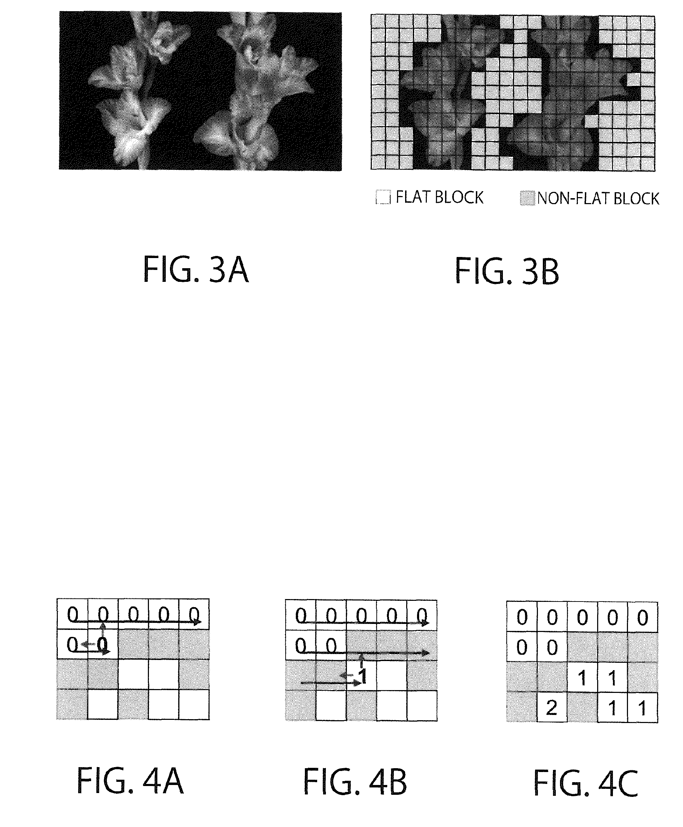

Figs. 3A and 3B are diagrams showing an example of the flat block determination. As a result of processing the flat block determination on the image for left eye shown in Fig. 3A, blocks corresponding to a background of the image are determined to be flat blocks and blocks corresponding to the objects are determined to be non-flat blocks, as shown in Fig. 3B.

Referring back to Fig. 2, after the flat block determination, the flat area generator 3 performs, on the flat blocks, labeling processing for adding the same label to flat blocks which have continuity (Step S3).

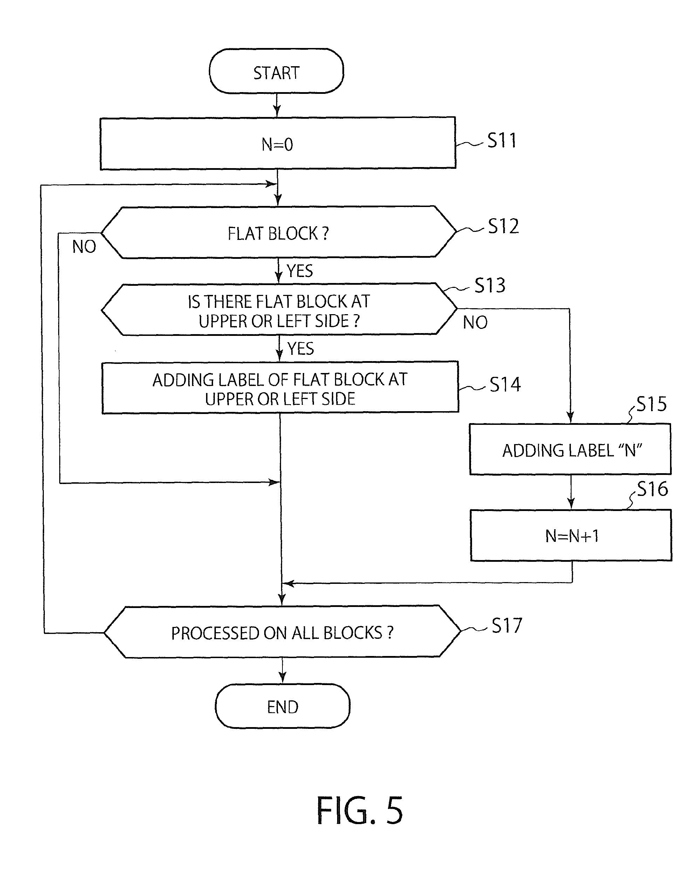

Figs. 4A to 4C are diagrams showing an example of the labeling processing, which explains Step S3 of Fig. 2 in detail. Furthermore, Fig. 5 is a flowchart showing procedures of the labeling processing. Figs. 4A to 4C and Fig. 5 show an example where the flat area generator 3 performs, on each of the flat blocks, the labeling processing in a raster scan order.

Firstly, the flat area generator 3 sets the number "N" of the label to be "0" (Step S11). Then, when the processing-target block is a flat block (Step S12 - YES), the flat area generator 3 adds a label according to whether or not there is a flat block at upper-side or left-side, which will be explained below.

When there is a flat block at upper-side or left-side of the labeling-target flat block (Step S13 - YES), one label has already been added to this flat block. Then, the flat area generator 3 adds a label identical to the label which has been added to the flat block to the labeling-target flat block (Step S14, Fig. 4A). Note that, if the label added to the block at upper-side is different from that added to the block at left-side, the flat area generator 3 adds the label having a smaller value.

On the other hand, when there is not a flat block at upper-side and left-side (Step S13 - NO), the flat area generator 3 adds the label "N" to the labeling-target flat block (Step S15, Fig. 4B), and increments the number "N" of the label (Step S16).

The flat area generator 3 performs the above processing on all of the blocks in the image for left eye (Step S17). Accordingly, an identical label is added to flat blocks continuing in a horizontal direction or a vertical direction, as shown in Fig. 4C. The area composed of flat blocks to which the identical label is added is named as a flat area. In Fig. 4C, three flat areas, composed of flat blocks to which the labels "0" to "2" are added respectively, are generated. Hereinafter, the flat area composed of flat blocks to which the label "k" is added is named as a flat area "k".

Note that, depending on an arrangement of the flat block, different labels may be added to continuing flat blocks. Therefore, after the processing in a raster scan order, correspondence processing may be performed so that an identical label is added to continuing flat blocks using a reference table of the label.

Furthermore, an example has been described where flat block at only upper-side and left-side are referred, the flat block at upper-left-side and/or upper-right side may be referred. In this case, an identical label is added to flat blocks continuing, not only in the horizontal direction and the vertical direction, but also in a diagonal direction.

Referring back to Fig. 2, after the labeling processing, the flat area generator 3 performs elimination processing for eliminating a flat area, the number of the flat blocks in the flat area being smaller than a predetermined threshold, to assume the flat area as not a flat area (Step S4). This is because the flat area having a few flat blocks may be due to incorrect flat block determination or may be just a noise.

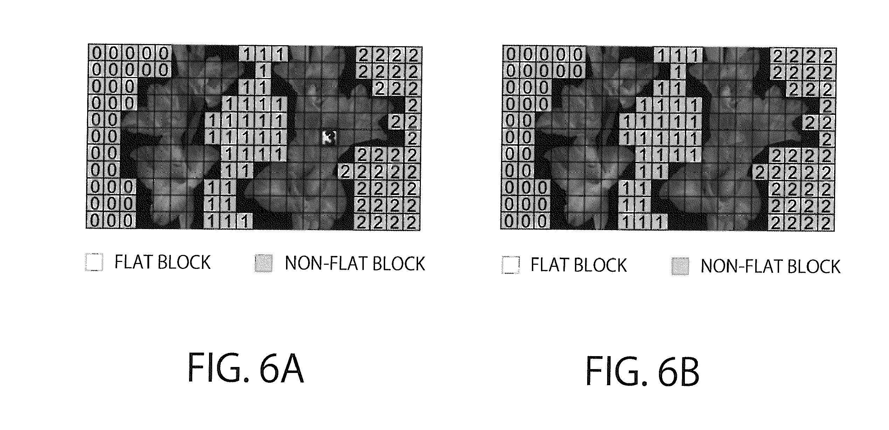

Figs. 6A and 6B are diagrams showing an example of the elimination processing. In Fig. 6A, four flat areas, that is, a flat area "0" to a flat area "3" are generated. Each of the flat area "0" to flat area "2" includes a certain degree of flat blocks. On the other hand, the flat area "3" includes only one flat block. Therefore, the flat area generator 3 performs the elimination processing where the flat area "3" is assumed as not a flat area. As a result, three flat areas, that is, a flat area "0" to a flat area "2" are generated as shown in Fig. 6B.

Referring back to Fig. 2, after the elimination processing, the flat area generator 3 performs the combining processing for combining a plurality of non-continuous flat areas having similar features (Step S5). The feature is, for example, an average of the luminance values or color values in the flat area.

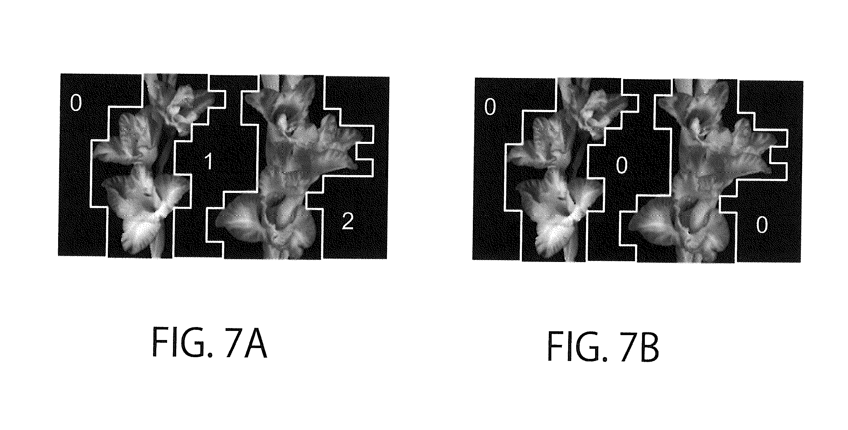

Figs. 7A and 7B are diagrams showing an example of the combining processing. In Fig. 7A, as a result of the elimination processing, three flat areas "0" to "2" are generated. Here, the flat areas "0" to "2" are almost black, and thus, they have a similar feature. Therefore, as shown in Fig. 7B, the flat area generator 3 combines these flat areas "0" to "2" to set the flat area "0". The image shown in Figs. 7A and 7B, it is recognized that there are objects whose background is black space. Accordingly, comparing to processing the flat areas "0" to "2" independently, more accurate depth information can be generated by combining them.

Note that, if similar flat areas are combined in first, the effect of the elimination processing may decrease because isolated flat areas having a few blocks are combined. Therefore, it is preferable that the combining processing (Step S5 of Fig. 2) is performed after the elimination processing (Step S4). However, these orders may be changed. Furthermore, the flat area generator 3 has the label used in Steps S3 to S5 as a map associated with each block in the image for left eye, for example. In the map, the value of the label is written to the flat block, and the particular value, which cannot be the value of the label, is written to the non-flat block.

Then, after the flat area is generated as the above, the depth information generator 4 generates the depth information added to all of the flat blocks in each of the flat areas in common (Step S6). The added depth information is set taking the similarity between boundary non-flat blocks and the flat blocks in the flat area neighboring the boundary non-flat blocks. Here, the boundary non-flat block means a non-flat block located at outside of the flat area and neighboring the flat block in the flat area at top, bottom, left or right side (or eight directions including diagonal directions).

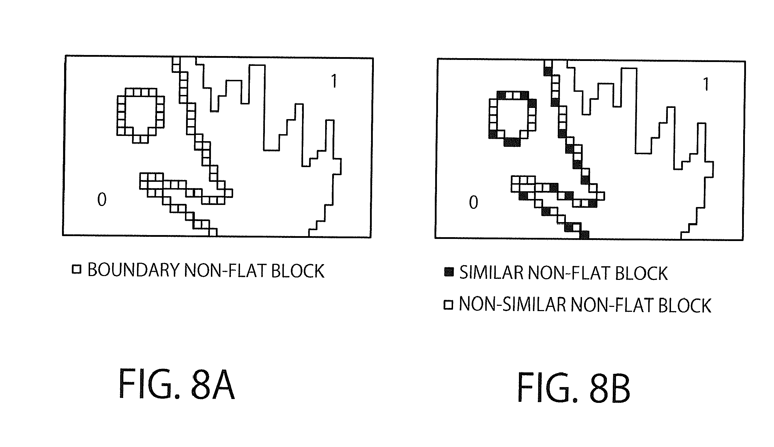

Figs. 8A and 8B are diagrams explaining processing operations of the depth information generator 4. A generation manner of the depth information added to the flat blocks in a flat area "0" in Fig. 8A will be explained. Note that in this example, the depth information is a depth value which can be a value of "0" to "255", and as the value is smaller, the object is seen at nearer side while as the values is larger, the object is seen at further side.

In the flat area "0", there exist some boundary non-flat blocks as shown in Fig. 8A. The depth information generator 4 determines whether or not each of the boundary non-flat blocks is similar to the neighboring flat block. Fig. 8B shows a determination result, in which the number of non-similar boundary non-flat blocks (hereinafter, referred to as "non-similar non-flat blocks" simply) is larger than that of similar boundary non-flat blocks (hereinafter, referred to as "similar non-flat blocks" simply). The depth information generator 4 determines that the flat area "0" is a background when the number of the non-similar non-flat blocks is larger. On the other hand, the depth information generator 4 determines that the flat area "0" is a foreground when the number of the similar non-flat blocks is larger. This is because the boundary non-flat blocks are considered to be in front of the flat area or the depth of the boundary non-flat blocks is the same as that of the flat area, generally.

The depth information generator 4 adds the average of the tentative depth information of the similar non-flat block (that is, boundary non-flat blocks considered to be a foreground) to each of the flat blocks in the flat area determined to be a foreground. On the other hand, the depth information generator 4 adds the maximum value among the tentative depth information of the non-similar non-flat blocks (that is, boundary non-flat blocks considered to be a background).

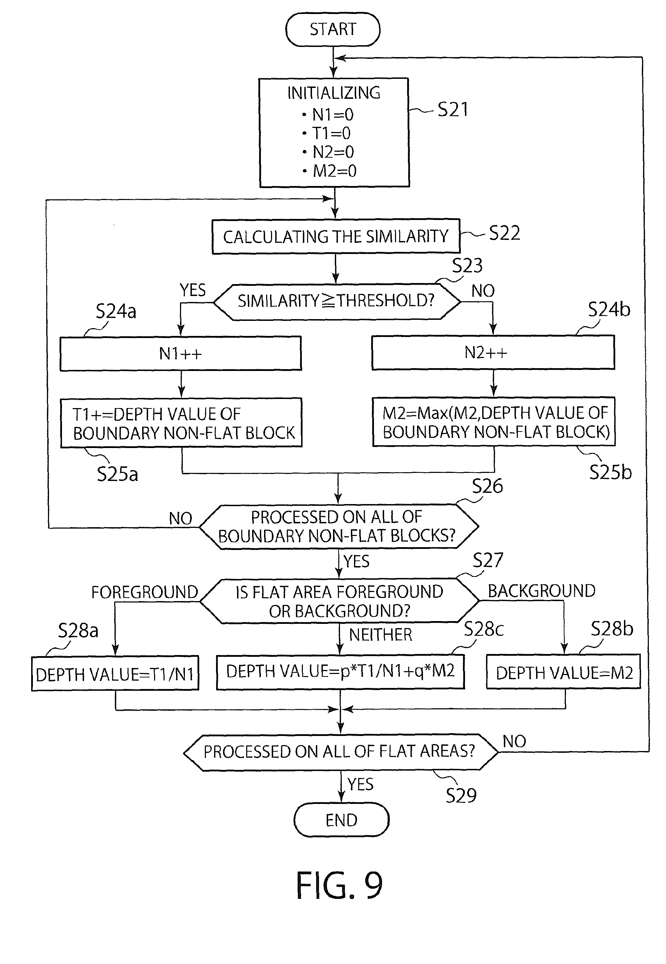

Fig. 9 is a flowchart showing an example of processing operation of the depth information generator 4. Hereinafter, the processing operation thereof will be explained in detail.

Firstly, the depth information generator 4 initializes each of parameters (Step S21). More specifically:

number of similar non-flat blocks N1 = 0;
sum of the depth of similar non-flat blocks T1 = 0;
number of non-similar non-flat blocks N2 = 0; and
maximum depth of non-similar non-flat blocks M2 = 0 (theoretical minimum).

Note that, hereinafter, the above sum of the depth of similar non-flat blocks T1 is referred to as sum of depth T1, and the above maximum depth of non-similar non-flat blocks M2 is referred to as maximum depth M2.

Next, the depth information generator 4 calculates a similarity between each of the boundary non-flat blocks and each the flat blocks neighboring the boundary non-flat block (Step S22). Then, the depth information generator 4 determines whether or not the similarity is equal to or more than a predetermined threshold (Step S23). If equal to or more than, the boundary non-flat block is similar to the flat block neighboring the non-flat block. On the other hand, if less than, the boundary non-flat block is not similar to the flat block neighboring the non-flat block. The similarity can be defined based on various feature quantity.

For example, the similarity can be defined as an absolute difference value between a luminance average of each pixel in the boundary non-flat blocks and a luminance average of each pixel in the flat block. Then, it is determined whether or not the absolute difference value is equal to or more than the threshold. The threshold may be a fixed value, or a dynamically defined. For example, the threshold when the image is totally bright may be larger than the threshold when the image is totally dark. Furthermore, the luminance can be replaced by color difference.

Moreover, a sum of absolute difference or a sum of squared difference between each pixel in the boundary non-flat block and each pixel existing at a corresponding location in the flat block can be used as the similarity.

Alternatively, a sum of absolute difference between a motion vector of the boundary non-flat block and a motion vector of the flat block can be used as the similarity. An absolute difference between edge strength of the boundary non-flat block and edge strength of the flat block can be used as the similarity. For example, the edge strength can be defined using one of a variance of luminance or color difference, an average of an absolute difference between neighboring pixels in the block, and a maximum value of the same.

It is also possible to define the similarity by combining two or more of the above explained feature quantities.

Referring back to Fig. 9, when the similarity is equal to or more than the threshold (Step S23 - YES), the depth information generator 4 increments the number of similar non-flat blocks N1 by "1" (Step S24a), and adds the tentative depth value of the boundary non-flat block to the sum of depth T1 (Step S25a).

On the other hand, when the similarity is less than the threshold (Step S23 - NO), the depth information generator 4 increments the number of non-similar non-flat blocks N2 by "1" (Step S24b), and uploads the maximum depth M2 (Step S25a). That is, the depth information generator 4 selects a maximum among the present maximum depth M2 and the tentative depth value of the boundary non-flat block and sets the selected one as a new maximum depth M2.

The above processing is performed on all of the boundary non-flat blocks (Step S26).

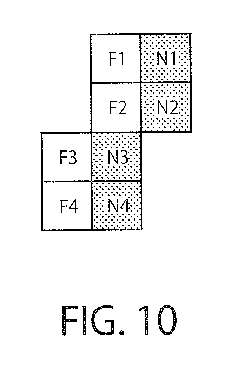

Note that when one boundary non-flat block neighbors a plurality of flat blocks in the flat area, a plurality of times of the processing are performed on the one boundary non-flat block. In Fig. 10, it is assumed that blocks F1 to F4 are flat blocks in a flat area and that blocks N1 to N4 are boundary non-flat blocks. The boundary non-flat block N1 neighbors one flat block F1. Therefore, one time of processing of Steps S22 to S28a (or S28b, S28c) in Fig. 9 is performed on the boundary non-flat block N1. On the other hand, the boundary non-flat block N3 neighbors two flat blocks F2 and F3. Therefore, two times of processing of Steps S22 to S28a (or S28b, S28c) in Fig. 9, that is, processing with the flat block F2 and that with the flat block F2, are performed on the boundary non-flat block N3.

Referring back to Fig. 9, when processing for all of the boundary non-flat blocks have been completed (Step S26 - YES), the depth information generator 4 determines whether the flat area is a foreground, background, or not foreground and not background (Step S27).

As a simple determination way, the depth information generator 4 may determine that the flat area is a foreground when the number of similar non-flat blocks N1 is equal to or more than the number of non-similar non-flat blocks N2, and that the flat area is a background when the number of similar non-flat blocks N1 is less than the number of non-similar non-flat blocks N2. In this case, the following step S28 is not performed.

Alternately, the depth information generator 4 may determines that the flat area is a foreground or a background when there is a significant difference between the number of similar non-flat blocks N1 and the number of non-similar non-flat blocks N2, and that the flat area is neither the foreground nor background when there is no significant difference therebetween. More specifically, when the difference therebetween is equal to or larger than a predetermined value, or when the number of one of the both non-flat blocks is predetermined times as large as that of the other or more, the depth information generator 4 may consider that there is a significant difference.

Generally, the depth information generator 4 may determines that the flat area is a foreground when the following equation (1) is satisfied, the flat area is a background when the following equation (2) is satisfied, and that the flat area is neither a foreground nor a background when neither the equation (1) nor (2) is satisfied.

$$N1 \geq a * N2 + b ... (1)$$

$$N2 \geq a * N1 + b ... (1)$$

Here, "a" is a constant equal to ore more than 1, and "b" is a constant equal to or more than 0.

According to the determination result, the following processing is performed.

When the flat area is determined to be a foreground, the depth information generator 4 sets T1/N1, which is an average value among the depth values of the similar non-flat blocks, to a depth value to be added to each flat block in the flat area (Step S28a).

When the flat area is determined to be a background, the depth information generator 4 sets the maximum depth of non-similar non-flat blocks M2, that is, the depth value added to a non-flat block which is seen at nearest side, to a depth value to be added to each flat block in the flat area (Step S28b).

When the flat area is determined to be neither a foreground nor a background, the depth information generator 4 generates the depth value to be added to each flat block in the flat area taking both the above T1/N1 and M2 into consideration as a safe plan. One example is to set p * T1/N1 + q * M2 to the depth value. Here, "p" and "q" may be predetermined constants, or be the number of the similar blocks N1 and the number of the non-similar blocks N2, respectively.

Note that, with regard to a manner for generating the depth value, various modified examples can be conceived. For example, at step S28b, a maximum value of the depth values of whole of the image, instead of the maximum depth M2, can be used. Furthermore, instead of the maximum depth M2, a histogram of the depth values of the non-similar non-flat blocks (indicating appearance frequency of each depth value) is generated, and depth value corresponding to top 2% can be used, for example. Thereby, it is possible to suppress influence of noise.

As stated above, the depth value added to all of flat blocks in one flat area in common is generated. The above Steps S21 to S28a (or S28b, S28c) are performed on all of flat areas (Step S29).

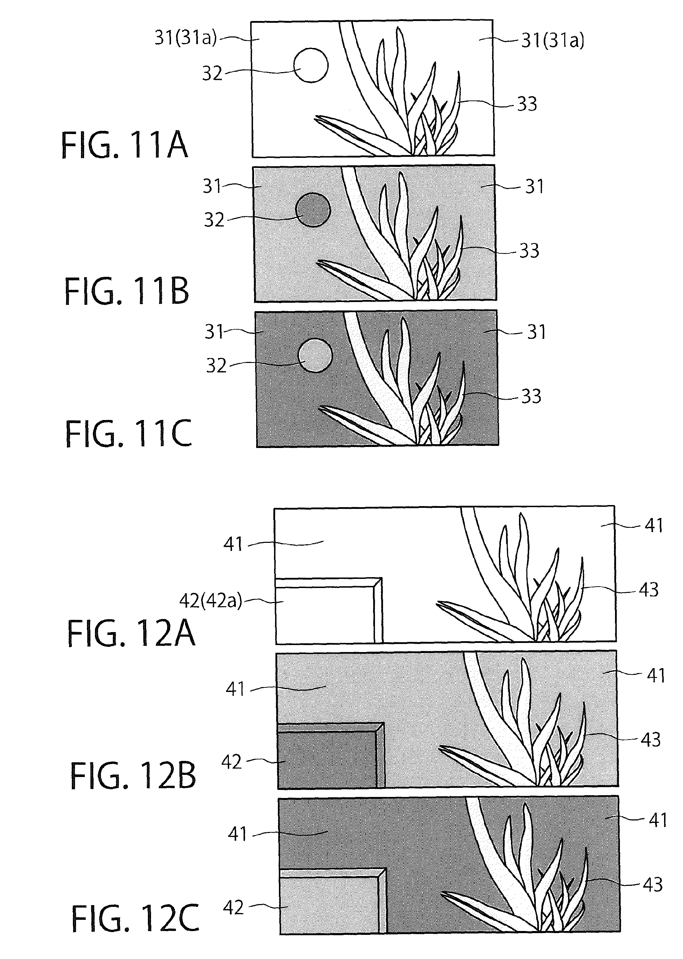

FIG. 11A is a drawing showing an example of an image for left eye. In the image, sky 31 which is a background, a moon 32 which is a foreground, and a plant 33 are included. The plant 33 is at the nearest side, the moon 32 should be seen at the second nearest side, and the sky 31 should be seen at the furthest side. FIG. 11A shows an example where the sky 31 is a flat area 31a and is a background (not foreground).

FIGs. 11B and 11C are diagrams schematically showing the depth information. In these diagrams, the darker area means larger depth value. That is, the darker area is seen at further side.

FIG. 11B is a comparison example where proper depth information is not generated. In FIG. 11B, the flat area 31a is determined to be a foreground, and thus, the depth relationship between the moon 32 and the sky 31 are reversed. In this case, a hole is seen in the sky 31 and the moon 32 is seen at the further side of the hole.

On the other hand, FIG. 11C shows depth values generated by applying the present embodiment. In FIG. 11C, the flat area 31a is determined to be a background correctly, and thus, the depth value of the sky 31 is larger than that of the moon 32, and the depth value of the moon 32 is larger than that of the plant 31. Therefore, the moon 32 is seen at nearer side compared to the sky 31, which is a correct appearance.

FIG. 12A is a drawing showing another example of an image for left eye. In the image, sky 41 which is a background, a wall 42 and a plant 33 which are foregrounds are included. The plant 43 is at the nearest side, the wall 42 should be seen at the second nearest side, and the sky 41 should be seen at the furthest side. FIG. 12A shows an example where the wall 42 is a flat area 42a and is a foreground (not a background).

FIGs. 12B and 12C are diagrams schematically showing the depth information. In these diagrams, the darker area means larger depth value. That is, the darker area is seen at further side.

FIG. 12B is a comparison example where proper depth information is not generated. In FIG. 12B, the flat area 42a is determined to be a background, and thus, the depth relationship between the wall 42 and the sky 41 are reversed. In this case, a hole is seen in the sky 41 and the wall 42 is seen at the further side of the hole.

On the other hand, FIG. 12C shows depth values generated by applying the present embodiment. In FIG. 12C, the flat area 42a is determined to be a foreground correctly, and thus, the depth value of the sky 41 is larger than that of the wall 42, and the depth value of the wall 42 is larger than that of the plant 43. Therefore, the wall 42 is seen at nearer side compared to the sky 41, which is a correct appearance.

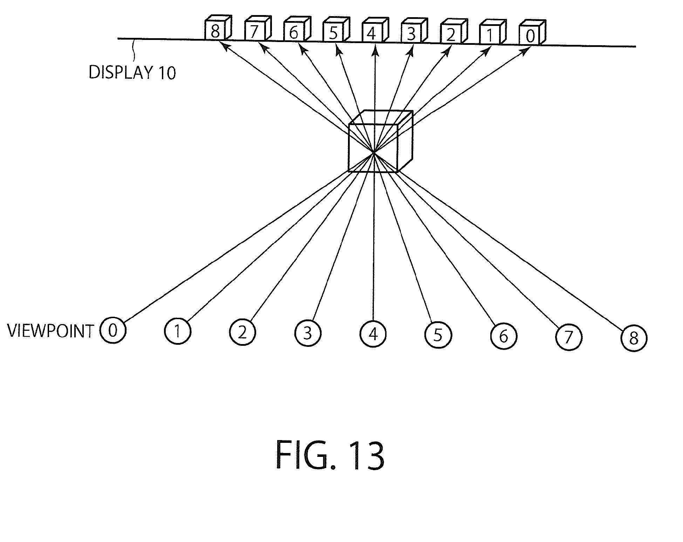

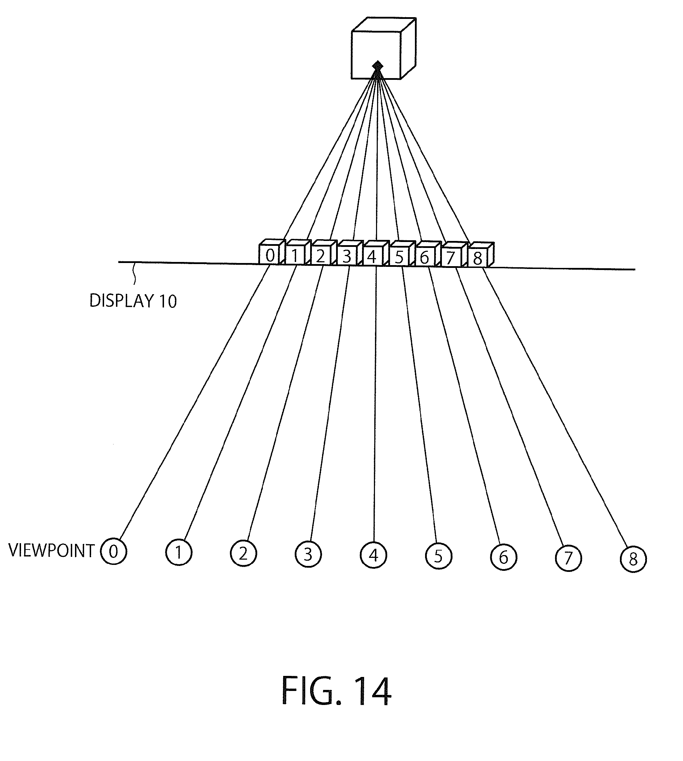

Referring back to Fig. 2, after the depth information is generated, the parallax image generator 5 generates nine parallax images from the image for left eye (Step S7). For example, as shown in Fig. 13, in a case of a parallax image viewed from left direction, the block which should be displayed nearer side from the display 10 is seen shifted to the right side. As the viewpoint locates at left side, the block is seen more shifted to the right side. Therefore, based on the depth information, the parallax image generator 5 shifts the block in the image for left eye, which should be displayed nearer side, to the right side. On the other hand, as shown in Fig. 14, in a case of a parallax image viewed from left direction, the block which should be displayed further side from the display 10 is seen shifted to the left side. As the viewpoint locates at left side, the block is seen more shifted to the left side considerably. Therefore, based on the depth information, the parallax image generator 5 shifts the block in the image for left eye, which should be displayed further side, to the left side.

Then, the part where the shifted block has been originally located is interpolated using the surrounding pixels. When generating the parallax image, the depth information generated by the depth information generator 4 is used for each block in the flat area, whereas the tentative depth information added by the stereo-matching module 1 is used for the other blocks.

Then, the generated nine parallax images are stereoscopically displayed on the display 10 (Step S8).

As stated above, in the present embodiment, identical depth information is added to continuing flat blocks. Therefore, accurate depth information can be generated even on the flat block, on which stereo-matching processing is difficult.

Note that, in the above embodiment, an example has been shown where the depth information is a depth value indicative of how far each block should be seen at near-side or fur-side from the display 10. On the other hand, the depth information may be a parallax indicative of how a block in the image for right eye is shifted with regard to the corresponding block in the image for left eye.

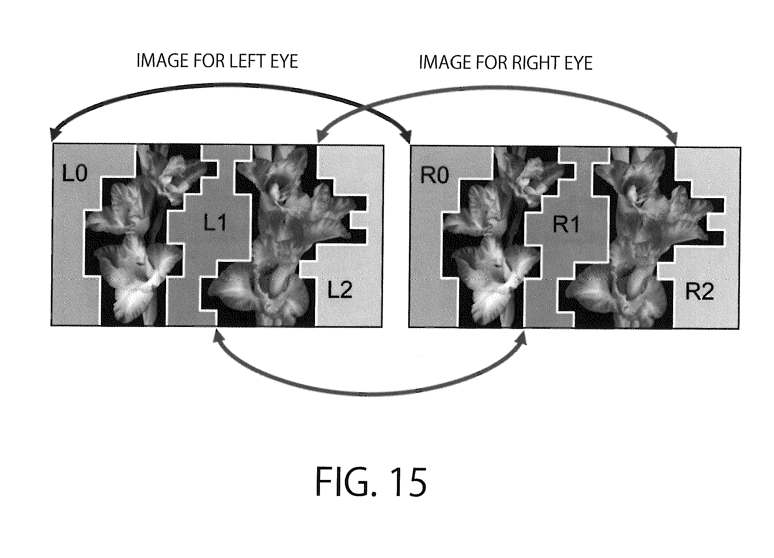

Furthermore, in the above embodiment, an example has been shown where processing of Step S2 and the later of Fig. 2 is performed on only the image for left eye. On the other hand, the parallax may be used as the depth information, and the above processing may be performed both on the images for left eye and right eye. As a result, as shown in Fig. 15, flat areas are generated both in the images for left eye and right eye. Then, the depth information generator 4 searches the flat area in the image for left eye (for example, flat area L0) and the flat area corresponding thereto in the image for right image (for example, flat area R0). This search can be performed based on a gravity of the flat area and/or the number of the flat blocks in the flat area, for example.

Then, the shift between the gravity of the image for left eye and that of the image for right eye is added to the flat block in the flat area in common as the parallax. When the search process is successful, more accurate depth information (parallax) can be obtained.

Note that, the image processing device includes at least a part of Fig. 1. For example, the stereo-matching module 1 can be omitted, and an input image, to which the tentative depth information is added in advance, is inputted to the block determiner 2.

At least a part of the image processing device explained in the above embodiments can be formed of hardware or software. When the image processing device is partially formed of the software, it is possible to store a program implementing at least a partial function of the image processing device in a recording medium such as a flexible disc, CD-ROM, etc. and to execute the program by making a computer read the program. The recording medium is not limited to a removable medium such as a magnetic disk, optical disk, etc., and can be a fixed-type recording medium such as a hard disk device, memory, etc.

Further, a program realizing at least a partial function of the image processing device can be distributed through a communication line (including radio communication) such as the Internet etc. Furthermore, the program which is encrypted, modulated, or compressed can be distributed through a wired line or a radio link such as the Internet etc. or through the recording medium storing the program.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fail within the scope and spirit of the inventions.

**Claims**

1. An image processing device comprising:

    a block determiner (2) configured to determine whether each of blocks in an input image is a flat block or a non-flat block;

a flat area generator (3) configured to generate a flat area comprising at least one flat block based on continuity of the flat block; and

a depth information generator (4) configured to generate depth information added to all of the flat blocks in the flat area in common according to a first number and a second number, the first number being the number of the non-flat blocks which is similar to the neighboring flat block and the second number being the number of the non-flat blocks which is not similar to the neighboring flat block among the non-flat blocks neighboring the flat block in the flat area.

2. The device of Claim 1, wherein tentative depth information is added into each of the blocks in the input image in advance,
the depth information generator (4) is configured to set an average value of values of the tentative depth information of the non-flat blocks which is similar to the neighboring flat block to be the depth information added to all of the flat blocks in the flat area when a following equation (1) is satisfied,

$$N1 \geq a * N2 + b \ldots (1)$$

where, the N1 is the first number, the N2 is the second number, the "a" is a first constant equal to or larger than 1, and the "b" is a second constant equal to or larger than 0.

3. The device of Claim 1, wherein tentative depth information is added into each of the blocks in the input image in advance,

the depth information generator (4) is configured to set

the tentative depth information of the non-flat block seen at the furthest side among the non-flat block which is not similar to the neighboring flat block, or
the tentative depth information of a block seen at the furthest side among the input image

to be the depth information added to all of the flat blocks in the flat area when a following equation (2) is satisfied,

$$N2 \geq a * N1 + b \ldots (1)$$

where, the N1 is the first number, the N2 is the second number, the "a" is a first constant equal to or larger than 1, and the "b" is a second constant equal to or larger than 0.

4. The device of Claim 1, wherein tentative depth information is added into each of the blocks in the input image in advance,

the depth information generator (4) is configured to generate the depth information added to all of the flat blocks in the flat area based on

an average value of values of the tentative depth information of the non-flat block which is similar to the neighboring flat block, and the tentative depth value of the non-flat block seen at the furthest side among the non-flat block which is similar to the neighboring flat block

when neither a following equation (3) nor a following equation (4) is satisfied,

$$N1 \geq a * N2 + b \ldots (3)$$

$$N2 \geq a * N1 + b \ldots (4)$$

where, the N1 is the first number, the N2 is the second number, the "a" is a first constant equal to or larger than 1, and the "b" is a second constant equal to or larger than 0.

5. The device of Claim 1, wherein the depth information generator (4) is configured to determine whether the non-flat area is similar to the neighboring flat block based on a difference between
an average value of luminance values of the flat blocks or an average value of color difference values thereof, and
an average value of luminance values of the non-flat blocks neighboring the flat block or an average value of color difference values thereof.

6. The device of Claim 1, further comprising a stereo-matching module (1) configured to perform stereo-matching processing on a first image and a second image, the first image comprising a first viewpoint, the second image comprising a second viewpoint different from the first viewpoint, and configured to add the tentative depth information to each block in the first image,
wherein the block determiner (2) is configured to perform processing on the first image as the input image.

7. The device of Claim 1, further comprising:

a parallax image generator (5) configured to generate a plurality of parallax images from the input image using the depth information of the flat area added by the depth information generator; and
a display (10) to display the plurality of parallax images.

8. An image processing method comprising:

determining whether each of blocks in an input image is a flat block or a non-flat block;
generating a flat area comprising at least one flat block based on continuity of the flat block; and
generating depth information added to all of the flat blocks in the flat area in common according to a first number and a second number, the first number being a the number of the non-flat blocks which is similar to the neighboring flat block and the second number being the number of the non-flat blocks which is not similar to the neighboring flat block among the non-flat blocks neighboring the flat block in the flat area.

9. An image processing program to cause a computer to execute:

determining whether each of blocks in an input image is a flat block or a non-flat block;
generating a flat area comprising at least one flat block based on continuity of the flat block; and
generating depth information added to all of the flat blocks in the flat area in common according to a first number and a second number, the first number being a the number of the non-flat blocks which is similar to the neighboring flat block and the second number being the number of the non-flat blocks which is not similar to the neighboring flat block among the non-flat blocks neighboring the flat block in the flat area.

IMAGE FOR LEFT EYE ○───▶ STEREO-MATCHING MODULE [1] ──▶ BLOCK DETERMINER [2] ──▶ FLAT AREA GENERATOR [3]

IMAGE FOR RIGHT EYE ○───▶

DEPTH INFORMATION GENERATOR [4] ──▶ PARALLAX IMAGE GENERATOR [5] ──▶ DISPLAY [10]

FIG. 1

START

STEREO-MATCHING — S1

FLAT BLOCK DETERMINATION — S2

LABELING — S3

ELIMINATION PROCESSING — S4

COMBINING PROCESSING — S5

DEPTH INFORMATION GENERATION — S6

PARALLAX IMAGE GENERATION — S7

DISPLAY — S8

END

FIG. 2

FLAT BLOCK    NON-FLAT BLOCK

# FIG. 3A

# FIG. 3B

# FIG. 4A

# FIG. 4B

# FIG. 4C

FIG. 5

| 0 | 0 | 0 | 0 | 0 |   |   |   | 1 | 1 | 1 |   |   |   | 2 | 2 | 2 | 2 |
| 0 | 0 | 0 | 0 | 0 |   |   |   |   | 1 |   |   |   |   | 2 | 2 | 2 | 2 |
| 0 | 0 | 0 |   |   |   |   |   | 1 | 1 |   |   |   |   |   | 2 | 2 | 2 |
| 0 | 0 | 0 |   |   |   | 1 | 1 | 1 | 1 |   |   |   |   |   |   | 2 |
| 0 | 0 |   |   |   | 1 | 1 | 1 | 1 | 1 | 1 |   |   |   |   | 2 | 2 |
| 0 | 0 |   |   |   | 1 | 1 | 1 | 1 | 1 | 1 |   |   |   |   |   | 2 |
| 0 | 0 |   |   |   | 1 | 1 | 1 | 1 |   |   |   |   |   | 2 | 2 | 2 | 2 |
| 0 | 0 |   |   |   | 1 | 1 |   |   |   |   | 2 | 2 | 2 | 2 | 2 |
| 0 | 0 | 0 |   |   | 1 | 1 |   |   |   |   |   | 2 | 2 | 2 | 2 |
| 0 | 0 | 0 |   |   | 1 | 1 |   |   |   |   |   | 2 | 2 | 2 | 2 |
| 0 | 0 | 0 |   |   | 1 | 1 | 1 |   |   |   |   | 2 | 2 | 2 | 2 |

☐ FLAT BLOCK    ▨ NON-FLAT BLOCK

FIG. 6A

| 0 | 0 | 0 | 0 | 0 |   |   |   | 1 | 1 | 1 |   |   |   | 2 | 2 | 2 | 2 |
| 0 | 0 | 0 | 0 | 0 |   |   |   |   | 1 |   |   |   |   | 2 | 2 | 2 | 2 |
| 0 | 0 | 0 |   |   |   |   |   | 1 | 1 |   |   |   |   |   | 2 | 2 | 2 |
| 0 | 0 | 0 |   |   |   | 1 | 1 | 1 | 1 |   |   |   |   |   |   | 2 |
| 0 | 0 |   |   |   | 1 | 1 | 1 | 1 | 1 | 1 |   |   |   |   | 2 | 2 |
| 0 | 0 |   |   |   | 1 | 1 | 1 | 1 | 1 | 1 |   |   |   |   |   | 2 |
| 0 | 0 |   |   |   | 1 | 1 | 1 | 1 |   |   |   |   |   | 2 | 2 | 2 | 2 |
| 0 | 0 |   |   |   | 1 | 1 |   |   |   |   | 2 | 2 | 2 | 2 | 2 |
| 0 | 0 | 0 |   |   | 1 | 1 |   |   |   |   |   | 2 | 2 | 2 | 2 |
| 0 | 0 | 0 |   |   | 1 | 1 |   |   |   |   |   | 2 | 2 | 2 | 2 |
| 0 | 0 | 0 |   |   | 1 | 1 | 1 |   |   |   |   | 2 | 2 | 2 | 2 |

☐ FLAT BLOCK    ▨ NON-FLAT BLOCK

FIG. 6B

FIG. 7B

FIG. 7A

FIG. 8A

□ BOUNDARY NON-FLAT BLOCK

FIG. 8B

■ SIMILAR NON-FLAT BLOCK
□ NON-SIMILAR NON-FLAT BLOCK

START

INITIALIZING
· N1=0
· T1=0
· N2=0
· M2=0 —— S21

CALCULATING THE SIMILARITY —— S22

S23

YES ◁ SIMILARITY ≧ THRESHOLD? ▷ NO

S24a

N1++

S24b

N2++

T1+=DEPTH VALUE OF
BOUNDARY NON-FLAT BLOCK

S25a

M2=Max(M2,DEPTH VALUE OF
BOUNDARY NON-FLAT BLOCK)

S25b

S26

NO ◁ PROCESSED ON ALL OF
BOUNDARY NON-FLAT BLOCKS? ▷

YES

S27

FOREGROUND ◁ IS FLAT AREA FOREGROUND
OR BACKGROUND? ▷ BACKGROUND

NEITHER

S28a

DEPTH VALUE=T1/N1

S28c

DEPTH VALUE=p*T1/N1+q*M2

S28b

DEPTH VALUE=M2

PROCESSED ON ALL OF FLAT AREAS? ▷ NO

YES

S29

END

FIG. 9

FIG. 10

31(31a) — 32 — 31(31a) — 33

FIG. 11A

31 — 32 — 31 — 33

FIG. 11B

31 — 32 — 31 — 33

FIG. 11C

41 — 42(42a) — 41 — 43

FIG. 12A

41 — 42 — 41 — 43

FIG. 12B

41 — 42 — 41 — 43

FIG. 12C

DISPLAY 10

VIEWPOINT

FIG. 13

DISPLAY 10

VIEWPOINT ⓪ ① ② ③ ④ ⑤ ⑥ ⑦ ⑧

FIG. 14

IMAGE FOR LEFT EYE        IMAGE FOR RIGHT EYE

L0   L1   L2        R0   R1   R2

FIG. 15

EP 2 711 894 A2